# EUROPEAN PATENT APPLICATION

(11) **EP 3 075 257 A1**
(43) Date of publication of application: **05.10.2016**
(21) Application number: 16156666.6
(22) Date of filing: 22.02.2016
(51) Int. Cl.: A22C 21/02

(54) **FOWL PLUCKING APPARATUS**

(30) Priority: 31.03.2015 ES 201530375 U
(71) Applicant: Argaiz Perez, Jose, 26500 Calahorra (La Rioja) (ES)
(72) Inventor: Argaiz Perez, Jose, 26500 Calahorra (La Rioja) (ES)
(74) Representative: Ungria López, Javier

(57) **Abstract**

The fowl plucking apparatus of the invention comprises a motor (3) which connects to a power output of a vehicle. The motor (3) is mounted on a base support (2) and is connected to a plain bearing (6) with radial-through orifices (7) wherein rubber elements (8) of different sizes are inserted. The apparatus of the invention also incorporates a motor (3) speed regulator (9).

## Description

### OBJECT OF THE INVENTION

The following utility model, as expressed in the title of the present description, refers to a fowl plucking apparatus whose main object is to pluck wildfowl, such as quails, turtle doves and doves, red-leg partridges, pheasants and certain waterfowls, such as ducks, which are present in rivers, lagoons and lakes, searching for food or during migrations.

Thus, another object of the apparatus is that it may be adapted for the plucking of a variety of fowls that have different skin smoothness, without affecting it.

In addition, another object of the apparatus is that it may be coupled and connected to a vehicle to be plugged to its power outlet, which may be obtained directly from the battery itself or from the lighter receptacle connector.

### FIELD OF APPLICATION

The present description discloses an apparatus to pluck fowl, especially wildfowl.

### BACKGROUND OF THE INVENTION

As it is known, plucking fowl manually takes time because, in general, the bird is first introduced in boiling water for a short period of time, such that feathers are loosened from the skin and, subsequently, manual plucking is carried out without the bird's skin being detached.

Thus, if the number of specimens is reduced, although manual plucking requires time, it is usually a worthy task as specimens are cooked and consumed later on, but when the number of items is high and, in addition, they accumulate in short periods of time, as it happens during the hunting season, said task becomes cumbersome and it is not unusual that hunters give away specimens to avoid said task.

### DESCRIPTION OF THE INVENTION

With the aim of avoiding said inconvenience and facilitating the plucking of wildfowl, such as quails, turtle doves and doves, red-leg partridges, pheasants and certain waterfowls, such as ducks, which are present in rivers, lagoons and lakes, searching for food or during migrations, in a quick and effective manner, the present description discloses a fowl plucking apparatus that is easy to transport and mount and which occupies a minimum space, the apparatus comprising:
- a base support;
- a motor mounted on the base support and which is connected to a power outlet;
- a plain bearing coupled to the driving axle of the motor, whose plain bearing is provided with a plurality of radial-through orifices;
- a variety of rubber elements inserted in a plurality of radial-through orifices of the plain bearing, and;
- a regulator to regulate the revolutions of the driving axle of the motor.

In a practical variant of the invention, the motor may be connected to a 12V power outlet of a vehicle.

In this manner, the base support may be composed of a bar that may be anchored to the ground and may be telescopic, thus occupying a minimum space when being transported and stored and facilitating its positioning when being used.

In addition, the motor may be connected to the battery or the lighter receptacle of the vehicle, thus being unnecessary to have access to the mains supply. Logically, it may also be connected to other power outlets.

Furthermore, the variety of rubber elements, in the form of hairs, inserted in the plurality of radial-through orifices of the plain bearing coupled to the driving axle, may have different sizes and rigidity, thus allowing them to be adapted to the different fowls to be plucked without causing damages thereto.

Likewise, the rotation speed of the driving axle will be regulated for the plucking of the different fowls based on their features.

To complement the description being made below, and to help to better understand the characteristics of the invention, this descriptive report is accompanied by a set of drawings in which, for illustrative and not restrictive purposes, the following has been represented.

### BRIEF DESCRIPTION OF THE FIGURES

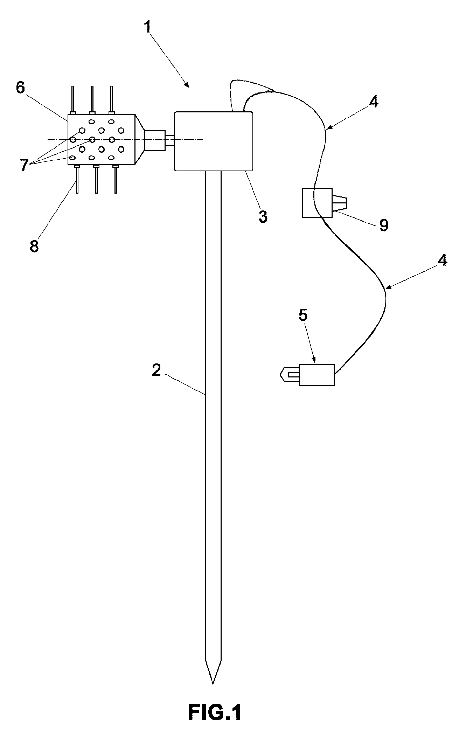

Figure 1 shows an elevation view of an apparatus which is the object of the invention, where it may be observed that it comprises a base support with a mounted motor and to whose driving axle a plain bearing provided with a plurality of radial-through orifices is coupled, wherein a variety of rubber elements are inserted.

### DESCRIPTION OF A PREFERRED EMBODIMENT

In view of the commented figures and according to the numbering adopted, it may be observed how the fowl plucking apparatus 1, especially intended for wildfowl, such as quails, turtle doves and doves, red-legged partridges, pheasants and certain waterfowls, such as ducks, which are present in rivers, lagoons and lakes, searching for food or during migrations, is composed of a base support 2 wherein a motor 3 is mounted with cables 4 and connectors 5 for connecting to the power outlet, such that a plain bearing 6 is coupled to the driving axle of the motor 3, said plain bearing 6 being provided with a plurality of radial-through orifices 7, wherein a variety of rubber elements 8 are inserted.

In a practical variant of the invention, the connectors may be connected to a 12V power outlet of a vehicle.

In addition, apparatus 1 incorporates a regulator 9 to regulate the revolutions of the driving axle of the motor to which the plain bearing 6 provided with a variety of rubber elements 8 has been coupled.

The base support 2 may be composed of a bar that may be anchored to the ground and may be telescopic, thus occupying a minimum space when being transported and stored and facilitating its positioning when being used, since when anchored to the ground, the motor 3 mounted in its opposing end may be at an appropriate height to facilitate the plucking of the fowl.

Motor 3, as indicated before, may obtain the power supply from the vehicle itself, for which purpose it may be connected to the battery or lighter receptacle thereof, thus being unnecessary to have access to the mains supply.

The variety of rubber elements 8, in the form of hairs, inserted in the plurality of radial-through orifices of the plain bearing 6 coupled to the driving axle, may have different sizes and rigidity, thus allowing it to be adapted to the different fowls to be plucked without causing damages thereto.

Likewise, the rotation speed of the driving axle may be regulated for the plucking of the different fowls depending on their features which, combined with the use of appropriate rubber elements 8, will prevent the skin of the fowl, which may be torn, from being affected during the plucking process.

To summarize, by means of the fowl plucking apparatus 1, said task may be carried out in a quick and simple way, allowing the hunter to take home the game captured already plucked.

## Claims

1. A fowl plucking apparatus **characterised in that** it comprises:
- a base support (2);
- a motor (3), mounted on the base support (2), which is connected to a 12V power outlet of a vehicle;
- a plain bearing (6) coupled to the driving axle of the motor (3), the plain bearing (6) being provided with at least two radial-through orifices (7);
- rubber elements (8) of different size, length and width inserted in the radial-through orifices (7) of the plain bearing (6), and;
- a regulator (9) to regulate the revolutions of the driving axle of the motor (3).

2. A fowl plucking apparatus, according to claim 1, **characterised in that** the base support (2) is composed of a bar which is anchored to the ground and has a telescopic configuration.

3. A fowl plucking apparatus, according to claim 1, **characterised in that** the motor (3) is connected to an element selected from a battery and a lighter receptacle of a vehicle.

4. A fowl plucking apparatus, according to claim 1, **characterised in that** the rubber elements (8) comprise a configuration, in the form of hairs, inserted in the radial-through orifices (7) of the plain bearing (6) coupled to the driving axle of the motor (3), and having different sizes and rigidity.

5. A fowl plucking apparatus, according to claim 1, **characterised in that** the rotation speed of the driving axle of the motor (3) may be regulated for the plucking of the different fowls depending on their features.
